# EUROPEAN PATENT APPLICATION

(11) **EP 1 574 967 A1**
(43) Date of publication of application: **14.09.2005**
(21) Application number: 03780902.7
(22) Date of filing: 18.12.2003
(51) Int. Cl.: G06F 17/28

(54) **TRANSLATION SUPPORT SYSTEM AND PROGRAM THEREOF**

(30) Priority: 18.12.2002 JP 2002366312
(71) Applicant: Ricoh Company, Ltd., Tokyo 143-8555 (JP)
(72) Inventor: YAMASHINA, Yukihisa, Machida-shi, Tokyo 194-0012 (JP)
(74) Representative: Muschke, Markus Artur Heinz
(86) International application number: PCT/JP2003/016270
(87) International publication number: WO 2004/055691

(57) **Abstract**

Included are a classified-translation outputting section 103A which outputs each translated text for each original text composing sentences to a translator terminal or a proofreader terminal in association with each original text in each classification, a translation-to-be-proofread registering section 103C which registers each translation in the translation target in a classified-translation storing section 101B whenever the translation receiving section 103B receives the translation for the translated text classified as the translation target among the respective classifications from the translator terminal, and a proofread-translation registering section 103E which classifies each proofread translation as proofread and registers in the classified-translation storing section 101B whenever the proofread-translation receiving section 103D receives the proofread translation for the translation classified as the proofreading target among the respective classifications, from the proofreader terminal.

## Description

### Technical Field

The present invention relates to a translation support system, and more particularly, to a translation support system which can indicate a portion to be translated or proofread, and a program which allows this system to run.

### Background Art

A translation work is generally performed by a translator who translates an original text, and a proofreader who proofreads a translation produced by the translator. More specifically, translation is performed such that an original text to be translated is translated first, and then a proofreader proofreads this translation. Conventionally, translation and proofreading are fully performed manually, so that it is inefficient.

Mechanical translation is expected to solve such a problem, but has not reached a practical level.

A solution to the conventional problem, a translation support system is used, which stores past-translation achievements (original texts and translations) in a storage device, extracts a translated original text same as or similar to an original text to be translated from the storage device, and refers to a translation of the extracted translated original text, thereby improving the efficiency of the translation work.

By using this kind of translation support system, translation can be efficiently performed. However, even with the use of the translation support system, as there are untranslatable portions in the original text and inaccurately translated portions, translation by a translator and proofreading by a proofreader are required.

### Disclosure of Invention

The conventional translation support system is not user-friendly to translators and proofreaders.

That is, it is not distinguishable whether a translation output by the translation support system is a correct one or just a translation as a mere candidate, a translator and a proofreader can not accurately seize portions to be translated or portions to be proofread, and thus may translate or proofread an unnecessary portion or may forget translating or proofreading a necessary portion.

The present invention has been made in view of the above-described problems, and it is an object of the present invention to provide a translation support system which can improve efficiencies of works by a translator and a proofreader.

It is another object of the invention is to provide a translation support system which can clearly indicate portions to be translated or proofread.

In order to solve the above-described problems, a translation support system according to the first aspect of the present invention is a translation support system (100) which is connected to a translator terminal (200) for a translator and a proofreader terminal (300) for a proofreader via a communication network (4), and comprises:
a first memory (101A) which stores a plurality of original texts to be translated;
a second memory (101B) which stores draft translations of the original texts in association with the plurality of original texts stored in the first memory;
a third memory (101B) which stores translations in association with the plurality of original texts;
a fourth memory (101B) which stores proofread translations in association with the plurality of original texts;
draft-translation outputting means (103A) for outputting an original text read out from the first memory (101A) and a draft translation read out from the second memory (101B) to the translator terminal via the communication network;
translation receiving means (103B) for receiving the translation edited in accordance with an instruction from the translator from the translator terminal via the communication network;
translation-to-be-proofread storing means (103C) for storing the translation received by the translation receiving means in the third memory (101B);
translation outputting means (103A) for outputting the translation read out from the third memory (101B) to the proofreader terminal via the communication network;
proofread-translation receiving means (103D) for receiving the proofread translation proofread in accordance with an instruction from the proofreader from the proofreader terminal via the communication network;
proofread-translation registering means (103E) for storing the proofread translation received by the proofread-translation receiving means in the fourth memory (101B); and
completed-text outputting means (103) for reading out and outputting the proofread translation from the fourth memory.

The translation support system (100) can further comprise:
text analyzing means (103) for analyzing and dividing the original text into a plurality of text elements and storing them in the first memory.

In this case, it is desirable that the translation support system should further include:
translation counting means (103F) for counting the number oftext elements of the translation stored in the third memory; and
outputting means (103G) for outputting the number of text elements counted by the translation counting means to the translator terminal.

Alternatively, it is desirable to include:
draft-translation counting means (103F) for counting the number of text elements of the draft translation stored in the second memory; and
outputting means (103G) for outputting the number of text elements counted by the draft-translation counting means to the translator terminal.

Or, it is desirable to include:
proofread-translation counting means (103F) for counting the number of text elements of the proofread translation stored in the fourth memory; and
outputting means (103G) for outputting the number of text elements counted by the proofread-translation counting means to the proofreader terminal,
   or it is desirable to include:
   translation counting means (103F) for counting the number of text elements of the translation stored in the third memory; and
   outputting means (103G) for outputting the number of text elements counted by the translation counting means to the proofreader terminal.

The translation support system may further include draft-translation producing means (103H) for producing the draft translation of the original text read out from the first memory, and storing it in the second memory.

The translation support system (100) may further include a fifth memory (103B) which stores a draft translation unnecessary to be translated or proofread,
wherein the draft-translation producing means (103H) may include means for determining whether or not translation and proofreading are necessary for the produced draft translation.

In this case, it is desirable that the draft-translation producing means (103H) should store the draft translation in the fifth memory when the determining means determines that neither translation nor proofreading is necessary for the draft translation.

In the translation support system, the translation outputting means (103A) may further read out and output the translation together with the original text associated therewith from the first memory, to the proofreader terminal.

The translation support system can further include text analyzing means (103) for analyzing and dividing the original text into a plurality of text elements and storing them in the first memory.

In this case, translation outputting means (103A) may read out and output a proofread translation preceding and/or succeeding a translation and having a predetermined number of text elements stored in the fourth memory, together with the translation, to the proofreader terminal.

The translation support system (100) may further include color information storing means (103) for storing color-designating information designating display colors of an original text, a provisional translation, a translation and a proofread translation, respectively.

In this case, it is desirable that the translation outputting means (103A) should instruct the translator terminal and/or the proofreader terminal to output the original text, provisional translation, translation and proofread translation in accordance with the color-designating information stored in the color information storing means.

According to the second aspect of the invention, a translation support program allows a computer including:
a first memory (101A) which stores a plurality of original texts to be translated;
a second memory (101B) which stores draft translations of the original texts in association with the plurality of original texts stored in the first memory;
a third memory (101B) which stores translations in association with the plurality of original texts; and
a fourth memory (101B) which stores proofread translations in association with the plurality of original texts,
and to be connected to a translator terminal (200) and a proofreader terminal (300) via a communication network (4),
to operate as:
   draft-translation outputting means (103A) for outputting an original text read out from the first memory (101A) and a draft translation read out from the second memory (101B) to the translator terminal via the communication network;
   translation receiving means (103B) for receiving the translation edited in accordance with an instruction from a translator from the translator terminal via the communication network;
   translation-to-be-proofread storing means (103C) for storing the translation received by the translation receiving means in the third memory (101B);
   translation outputting means (103A) for outputting the translation read out from the third memory (101B) to the proofreader terminal via the communication network;
   proofread-translation receiving means (103D) for receiving the proofread translation proofread in accordance with an instruction from a proofreader from the proofreader terminal via the communication network;
   proofread-translation registering means (103E) for storing the proofread translation received by the proofread-translation receiving means in the fourth memory (101B); and
   completed-text outputting means (103) for reading out and outputting the proofread translation from the fourth memory.

Those accomplish the aforementioned objects.

### Brief Description of Drawings

FIG. 1 is a diagram illustrating an embodiment of a translation support system.
FIG. 2 is a block diagram illustrating the structure of the translation support system in FIG. 1.
FIG. 3 is a diagram illustrating an example of information stored in a classified-translation storing section illustrated in FIG. 2.
FIG. 4 is a diagram illustrating an example of information stored in past-translation data storing section illustrated in FIG. 2.
FIG. 5 is a diagram illustrating an example of information stored in a segment-number storing section illustrated in FIG. 2.
FIG. 6 is a block diagram illustrating the structure of a translator terminal in FIG. 1.
FIG. 7 is a block diagram illustrating the structure of a proofreader terminal in FIG. 1.
FIG. 8 is a flowchart illustrating the process of the translation support system, which is a routine (translation support routine) for translating a text for proofreading a plurality of original texts to be translated.
FIG. 9 is a diagram illustrating a display example of a text display screen.
FIG. 10 is a diagram illustrating a display example of a classified-translation display screen.

### Best Mode for Carrying Out the Invention

An embodiment of a translation support system as the present invention will now be explained with reference to the accompanying drawings.

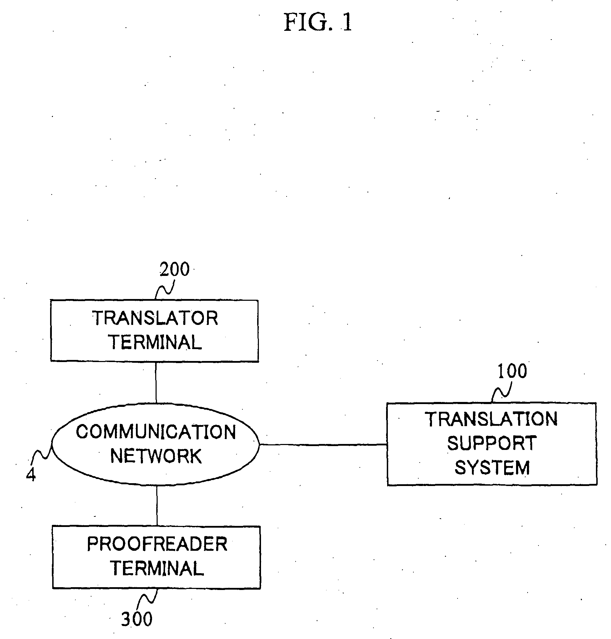

As illustrated in FIG. 1, a translation support system 100 of this embodiment is connected to a translator terminal 200 and a proofreader terminal 300 via a communication network 4.

The communication network 4 is composed by, for instance, the Internet, a public network, a dedicated line or the like which carries out communication based on a predetermined communication protocol such as TCP/IP (Transmission Control Protocol/Internet Protocol).

The translation support system 100 comprises, for instance, an information processing device which has a web management function and a database (DB) management function.

The translation support system 100 schematically 1) stores original texts, which were translated in the past, and translations thereof, 2) produces a draft translation based on the stored information when an original text to be translated is input, and 3) transmits the draft translation to the translator terminal 200 together with information representing translation accuracies of individual texts composing the draft translation (the rate of appropriation), and requests a translation. The translation support system 100 4) receives a translation produced by a translator from the translator terminal 200 (a translation produced by referring to and appropriating the draft translation), and 5) transmits the received translation and information representing the rate of appropriation for an associated draft translation to the proofreader terminal 300, receives a translation proofread by a proofreader from the proofreader terminal 300, outputs, transmits it, etc., and adds it to the stored information in association with the original text, and utilizes it for later translation processes.

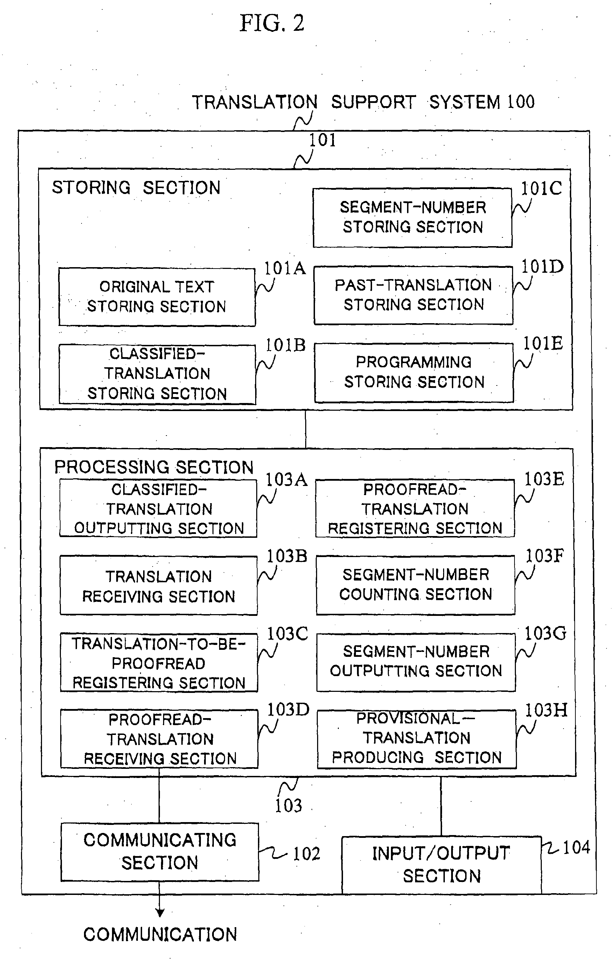

In order to realize those functions, as illustrated in FIG. 2, the translation support system 100 includes a storing section 101, a communicating section 102, a processing section 103 and an input/output section 104.

The storing section 101, which is for saving a translation support program, various kinds of data and the like, comprises a ROM (Read Only Memory), a RAM (Random Access Memory), a HDD (Hard Disk Drive) or the like, and, as illustrated in FIG. 2, includes an original text storing section 101A, a classified-translation storing section 101B, a segment-number storing section 101c, a past-translation storing section 101D and a program storing section 101E.

The original text storing section 101A stores the original texts to be translated, sentence by sentence.

The classified-translation storing section 101B classifies the translations produced at respective workings of translation, in accordance with the degree of completion thereof, and stores.

In this embodiment, the classified-translation storing section 101B classifies segments (sentences) constituting the original text to be translated and respective translations thereof in any of "non-translation and non-proofreading target", "translation target", "proofreading target" and "proofread", and stores. A relative location of each segment in the original text and the location of an associated segment in the translation are commonly specified by location-specifying information (for instance, a segment number). For instance, a translation of a segment in the original text specified by location-specifying information n (n-th segment) is a segment in the translation specified by location-specifying information n (n-th segment).

Among four kinds of classifications, the "non-translation and non-proofreading target" is one for a translation that is a final edition, not necessary translation or proofreading any more. The "translation target" is a classification for a translation that is to be reviewed by the translator, and corresponds to, for instance, a translation at a level that is extracted from the past stored data. The "proofreading target" is a classification for a translation that has been already translated or reviewed by the translator. "Proofread" is a classification for a translation that has been already proofread by the proofreader.

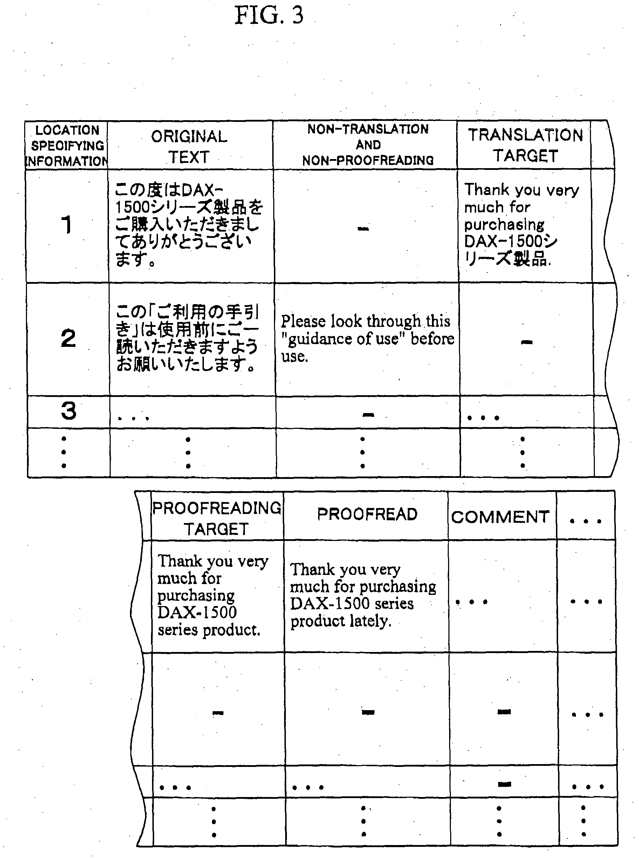

In the example of FIG. 3, with regard to the first segment (Thank you...) of the original texts (Thank you..., This use...), the translations classified as the "translation target", the "proofreading target" and "proofread" are stored, but no translation is stored as the "non-translation and non-proofreading target". With regard to the second segment (This use...), only the translation classified as the "non-translation and non-proofreading target" (translation-unrequired text) is stored.

If there is a comment with respect to a working for the text of each segment (for instance, an evaluation of the translation, a message for the proofreader, etc.), the classified-translation storing means 101B stores it in an area of comment information.

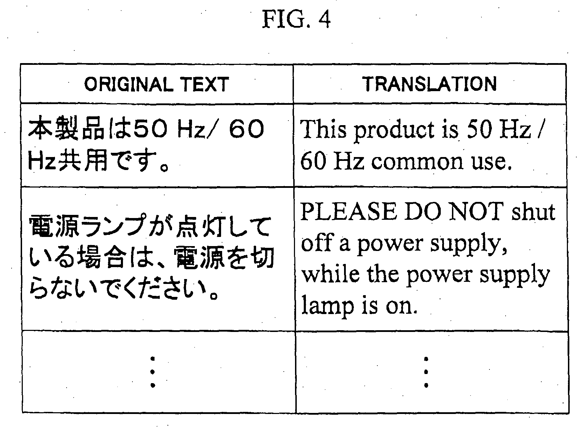

As illustrated by an example in FIG. 4, the segment-number storing section 101C illustrated in FIG. 2 stores the number of segments of the translated text stored in the classified-translation storing section 101B for each original text and each classification. Meanwhile, the segment-number storing section 101C may store the number of segments of the original text.

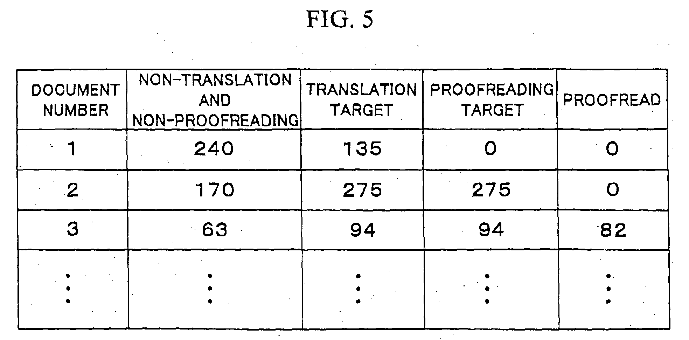

As illustrated by an example in FIG. 5, the past-translation data storing section 101D stores the original text translated and proofread in the past and the translation thereof in association with each other. In the past-translation data storing section 101D, the translation produced by using the translation support system 100 and the original text thereof are sequentially and additionally stored.

The program storing section 101E stores various kinds of programs for performing the processes of the translation support system 100, such as an operating system and the translation support program. By the cooperative operation of those respective kinds of the programs, the processing section 103 operates. The operation executed by the processing section 103 will be explained later.

The storing section 101 further stores color-designating information that is information designating display colors of the sentences classified into the above-described classifications, in order to display the above-described sentences in different colors in accordance with the classifications.

The communicating section 102 in FIG. 2, which comprises, for instance, a predetermined communication device, such as a NIC (Network Interface Card) or a router, connects the translation support system 100 to the communication network 4, and performs communication between the translator terminal 200 and the proofreader terminal 300.

The input/output section 104 in FIG. 2 includes an input device, such as a keyboard, a mouse or a media reader, and an output device, such as a display or a printer.

The processing section 103 in FIG. 2 is for controlling the overall operations of the translation support system 100, comprises, for instance, a CPU (Central Processing Unit) which interprets and executes the operation programs stored in the program storing section 101E. The processing section 103 functionally includes a classified-translation outputting section 103A, a translation receiving section 103B, a translation-to-be-proofread registering section 103C, a proofread-translation receiving section 103D, a proofread-translation registering section 103E, a segment-number counting section 103F, a segment-number outputting section 103G and a provisional translation producing section 103H.

The classified-translation outputting section 103A receives requests, which is sent from the translator terminal 200 and the proofreader terminal 300 for transmitting the original text and the translated text, transmitted from the communicating section 102. Referring to the classified-translation storing section 101B allows, the classified-translation outputting section 103A transmits the sentences of the original text and the translated texts of the respective classifications in association with one another to the translator terminal 200 and the proofreader terminal 300 via the communicating section 102. The output data to be transmitted is, for instance, in the SGML (Standard Generalized Markup Language) format. In this case, the classified-translation outputting section 103A refers to color-designating information stored in the storing section 101, and permits output data to include an instruction data to output (display, print) each translated text with the color designated by color-designating information of the classification to which the translated text belongs.

The translation receiving section 103B receives the translation and the original text thereof from the translator terminal 200 in association with each other, from the communicating section 102 and sends them to the translation-to-be-proofread registering section 103C.

The translation-to-be-proofread registering section 103C allows the translation received from the translation receiving section 103B to be associated with the received original text, classifies and registers the translation as the proofreading target in the classified-translation storing section 101B.

The proofread-translation receiving section 103D receives the proofread translation and the original text thereof from the proofreader terminal 300 in association with each other, from the communicating section 102, and transmits them to the proofread-translation registering section 103E.

The proofread-translation registering section 103E allows the proofread translation received from the proofread-translation receiving section 103D to be associated with the received original text, classifies and registers proofread translation as proofread in the classified-translation storing section 101B.

The segment-number counting section 103F counts the number of segments of the translated text of each original text which is registered in each classification, and stores it in the segment-number storing section 101C. A timing at which the segment-number counting section 103F counts a segment number is, for instance, a point at which either the translation-to-be-proofread registering section 103C or the proofread-translation registering section 103E registers the translation in the classified-translation storing section 101B.

The segment-number outputting section 103G receives requests, which are sent from the translator terminal 200 and the proofreader terminal 300, from the communicating section 102. The number of segments of the translated text of the original text registered in each classification from the segment-number storing section 101C, the number of segments being requested by the request, is read out, and transmitted to the translator terminal 200 and the proofreader terminal 300 via the communicating section 102.

The provisional translation producing section 103H provides a draft translation of each original text to be translated based on the past-translation data stored in the past-translation data storing section 101D. For instance, it compares each segment of the original text to be translated with each segment of the original text in the past-translation data, and extracts an identical or similar one. When there are a plurality of identical or similar ones, one which has the highest coincidence is selected according to a given criterion. The provisional translation producing section 103H takes the translation of the extracted text as the draft translation.

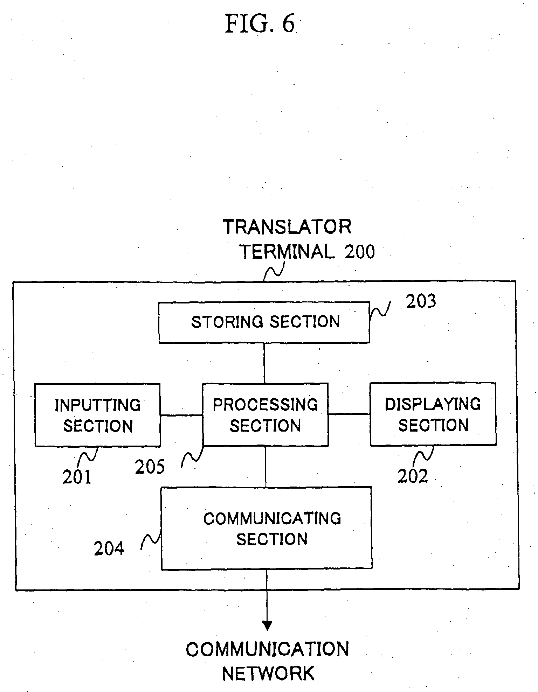

The translator terminal 200 is a terminal used by the translator, and, a terminal, such as a personal computer or a cellular phone, corresponds to the terminal. As illustrated in FIG. 6, the translator terminal 200 includes an inputting device 201, such as a keyboard, a displaying section 202, such as a computer display, a storing section 203, such as a ROM, a communicating section 204, such as a modem, and a processing section 205, such as a CPU.

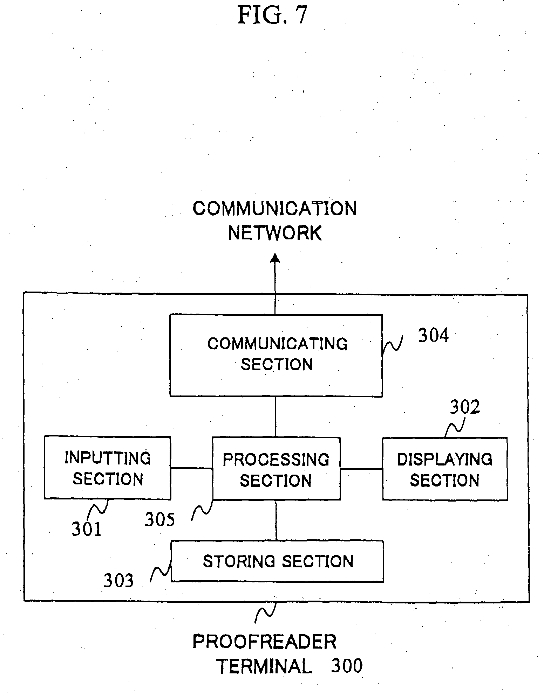

The proofreader terminal 300 is a terminal used by the proofreader, and a terminal, such as a personal computer or a cellular phone, corresponds to the terminal. As illustrated in FIG 7, the proofreader terminal 300 includes an inputting device 301, such as a keyboard, a displaying section 302, such as a computer display, a storing section 303, such as a ROM, a communicating section 304, such as a modem, and a processing section 305, such as a CPU.

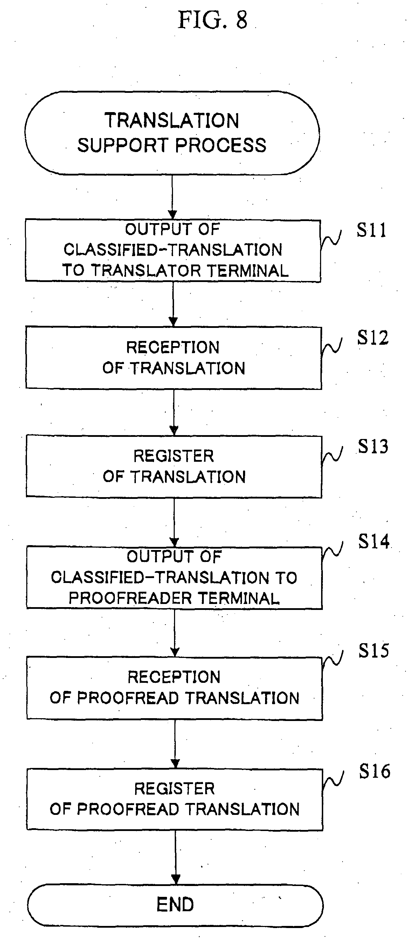

Next, operations in this embodiment will be explained based on FIGS. 8 to 10. Here, it is assumed that the translator and the proofreader translate the original text containing a plurality of texts. This original text is assumed to be input through the input/output section 104, and stored in text storing means 103A.

The procedures in this case will be briefly explained. First, 1) the provisional translation producing section 103H produces the draft translation, 2) the provisional translation producing section 103H classifies individual texts composing the produced draft translation and stores them in the classified-translation storing section 101B, 3) the translator translates the associated document while referring to the draft translation classified into the "translation target" and the original text, 4) the proofreader proofreads the translation classified into the proofreading target.

FIG. 8 is a flowchart illustrating the process of the translation support system 100, which is a routine (translation support routine) for translating a text for proofreading a plurality of original texts to be translated.

Here, the provisional translation producing section 103H preliminarily stores the produced provisional translations, classified into the non-translation and non-proofreading target and the translation target, into the classified-translation storing section 101B beforehand. That is, it divides the original text into segments (by a known schem, such as morphological analysis), and compares the segments of the original text with the original text stored in the past-translation data storing section 101D, and extracts an identical original text or a well identical original text. The translation of the extracted original text is adopted as the translation thereof, classified into the provisional translation or the translation-unrequired text according to the aforementioned rate of appropriation, and stored in a corresponding area in the classified-translation storing section 101B.

Hereinafter, the processes illustrated in FIG. 8 will be explained.

First of all, the classified-translation outputting section 103A of the translation support system 100 receives a request from the translator terminal 200. Referring to the classified-translation storing section 103B, it allows the draft translation for each sentence of the original text to be associated with each original text, and adds arrangement-designating information to the original text and the provisional translation, so that those can be in a predetermined arrangement, and color-designating information is added to the draft translation in such a way that the draft translation can be output in a predetermined color. It is then sent to the translator terminal 200 (Step S11).

To be more precise, the classified-translation outputting section 103A refers to the classified-translation storing section 103B, and selects that one of translated texts associated with the original text which is in any one of the classifications. According to this selecting method, 1) when there is a translated text classified as the non-translation and non-proofreading target, it is selected, 2) when a translated text classified as the non-translation and non-proofreading target is not stored and there is a translated text classified as the proofreading target, it is selected, 3) when a translated text classified as the non-translation and non-proofreading target and the proofreading target is not stored, but there is a translated text classified as the translation target, it is selected, 4) when nothing corresponds to any of 1) to 3), a translation classified as the translation target is selected.

"Each classification" here is initially equivalent to the non-translation and non-proofreading target, or the translation target. However, as the translation and proofreading works proceed (that is, as the steps S11 to S16 are repeated), the classifications, such as the proofreading target and proofread, will be included.

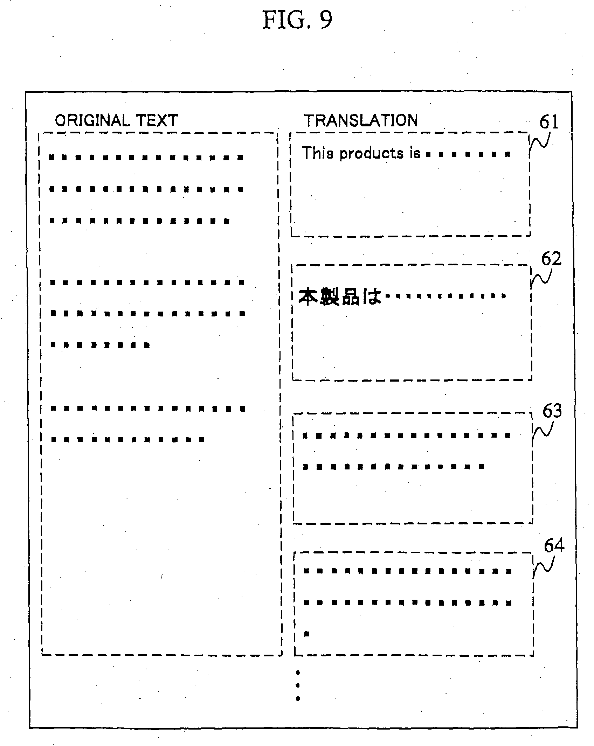

FIG. 9 is an example of a display screen to be displayed on the translator terminal 200 (a similar display screen is displayed on the proofreader terminal 300).

In FIG. 9, the original texts are displayed on the left, and the translations thereof are displayed on the right. Numerals 61, 62, 63 and 64 respectively denote the translation of the non-translation and non-proofreading target (translation-unrequired text), the translation to be translation (provisional translation), the translation to be proofread (translation), and the translation already proofread (proofread translation).

Individual translations on the right, though not discriminatable in the diagram, are colored in accordance with color-designating information. For instance, the translator terminal 200 displays the translated text, which is not to be translated or proofread, in black, one to be translated in red, one to be proofread in blue, and one having been already translated in magenta.

The output is made on the outputting device 24 of the translator terminal because the controlling section 210 produces a display screen in accordance with the instruction in the transmitted data from the translation support system 100. That is, the display data is transmitted to the output controlling section 240 (outputting device 24) in such a way as to arrange the original texts and the provisional translations, etc., in accordance with arrangement-designating information contained in the transmitted data, and to display the provisional translations colored in accordance with the color-designating information.

In the display screen of FIG. 9, as the working progresses, the translated texts change, the contents of the change are transmitted to the translator terminal 200, and the translated texts and the display color of each translated texts change. In this embodiment, the translated texts are changed in the order of provisional translation, translation, proofread translation, and the display colors of the translated texts are changed accordingly. Therefore, the translator and the proofreader can figure out the objects of translation and proofreading smoothly even if the translation work proceeds.

When the translator clicks the translated texts on the right of the screen by a mouse or the like, location-specifying information of the selected translated text is transmitted to the translation support system 100. The classified-translation outputting means 103A reads out the original text of the segment specified by location-specifying information, the translated texts of respective classifications, and comment information, adds arrangement-designating information and color-designating information so as to obtain a predetermined arrangement. The segment-number outputting means 103G reads out the number of segment of each classification of the original text from the segment-number storing means 101C, and adds the read-out number of segment and arrangement-designating information so as to set a predetermined arrangement thereof.

The translator terminal 200 or the proofreader terminal 300 performs the similar processes to the ones explained in FIG. 9, and transmits the display data to the output controlling section 240.

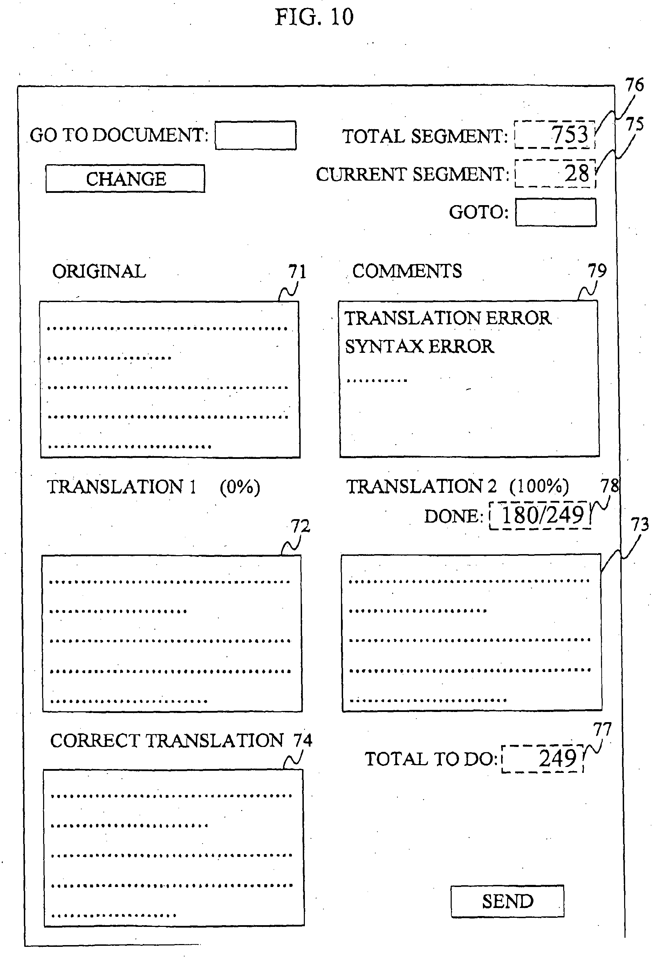

FIG. 10 is an example of a display screen of each translated text displayed on the translator terminal 200 or the proofreader terminal 300.

Among the translated texts associated with the original texts composing a sentence, the translated texts of the respective classifications are displayed on the display screen in FIG. 10. To be more precise, on this display screen, a display field 71 for the original text, a display field 72 for the translated texts which is not to be translated or proofread, a display field 73 for the translated text to be proofread (translation), and a display field 74 for the proofread translated text (proofread translation). Accordingly, the translator and the proofreader can figure out the translated texts of the respective classifications. When there is no associated translated text, the display field thereof is an empty field.

In FIG. 10, a portion denoted by numeral 75 indicates the total number of segments of the original text A portion denoted by numeral 76 indicates which segment in the original text is associated with the segment to be just edited. A portion denoted by numeral 77 indicates the total number of segments in the provisional translation classified as the translation target. Namely, the cumulative total of the provisional translations to be translated by the translator is displayed. A portion denoted by numeral 78 indicates the total number of segments in the translation classified as the proofreading target. Namely, the cumulative total of the provisional translations translated by the translator is displayed.

In the translator terminal 200, the display field 73 is set as editable (this is due to the instruction in the classified-translation outputting means 103A), the translator refers to the original text and the provisional translation and inputs the translation. When a transmission button is clicked after the entry in the display field 73, the entry is allowed to be associated with the sentence of its original text, and transmitted to the translation support system 100.

Returning to FIG 8, in the next step S12, the translation receiving section 103B receives the translation with respect to the provisional translation classified as the translation target among the respective classifications from the translator terminal 200 in segment, and allows the translation to be associated with the original text thereof. The translation-to-be-proofread registering section 103C allows the translation received from the translator terminal 200 to be associated with the sentence of the original text thereof, classifies into the area for "proofreading target", and registers in the classified-translation storing section 101B (Step S13).

Meanwhile, in the display screen illustrated in FIG 10, a segment-designating filed and a comment-entering field 79 are arranged in an editable manner. When the translator makes entries into those fields and clicks the transmission button, the translation support system responds to it, starts processing, and returns a result based on the processing result. That is, when a number or the like is entered in the segment-designating field, and the transmission button is pressed, the classified-translation outputting means 103A reads out the original text having the segment corresponding to the entered value, etc., from the classified-translation storing means 101 B, and the segment-number outputting means 103G reads out the segment number from the segment-number storing means 101C, performs a predetermined process to the read-out data, and re-transmits the display screen such as FIG 10. When a comment is entered in the comment-entering field 79, and the transmission button is pressed, the translation-to-be-proofread registering section 103C stores the entry in comment information in the classified-translation storing means 101B.

Returning to FIG 8, again, the translation support system 100 receives a request from the proofreader terminal 300, performs a process similar to the step S11, allows the provisional translation with respect to each sentence composing the original text to be associated with each original text, rearranges them so as to be in a predetermined arrangement, and sends them to the proofreader terminal 300 (Step S14).

The proofreader performs a computation similar to that of the translator, calls up the display screen in FIG. 10, and proofreads the translation. On the display screen displayed on the proofreader terminal 300, unlike the display screen displayed on the translator terminal 200, the display field 73 is set exclusively for display, but the display field 74 is set as editable. The portion denoted by numeral 77 indicates a total number of segments in the translation classified as the proofreading target. Namely, the cumulative total of the translations to be proofread by the proofreader is displayed. The portion denoted by numeral 78 indicates the total number of segments in the proofread translation classified as proofread. Namely, the cumulative total of the proofread translations proofread by the proofreader is displayed.

In FIG. 10, the proofreader enters the sentence as the result of the proofreading of the translation in the display field 74, and clicks the transmission button. The entery contents are transmitted to the translation support system 100 in association with the sentence of the original text.

Next, the proofread-translation receiving section 103D receives the proofread translation for the translation classified as the proofreading target among the above-described respective classifies in association with the original text thereof, segment by segment (FIG. 8, Step S15). Then, the proofread-translation registering section 103E associates the proofread translation received from the proofreader terminal 300 with the sentence of the original text, classifies it as the area for "proofread", and registers it in the classified-translation storing section 101B (Step S16).

By repeating the processes from the step S11 to the step S16 thus way, the translator and the proofreader can translate and proofread the original text composed by a plurality of sentences, in cooperation with each other.

Meanwhile, after the processes of the steps S13 and S16 are completed, the segment-number counting section 103F counts the number of segments in the translated text associated with the translation and the proofread translation, and stores it in the segment-number storing section 101C.

After that, the translation support system 100 executes a predetermined program to extract each sentence of the original text stored in the classified-translation storing section 101B and the proofread translation (excluding, however, any translation classified as the non-translation and non-proofreading target, if present), and store them in the past-translation data storing section 101D in association with each other. Achievements of translation and proofreading are stored thus way.

According to the embodiment explained above, in the translation support system 100, the classified-translation outputting section 103A refers to the original text storing section 101A and the classified-translation storing section 101B, associates each translation regarding each original text composing the sentence with each original text for each classification, and outputs them to the translator terminal 200 or the proofreader terminal 300. Accordingly, the portion to be translated and proofread can be presented to the translator and the proofreader.

In this case, for instance, when the original text is changed due to a reason such as a modification of a product, the portion thereof is added as a new original text, a part thereof requiring translation is newly classified as the "translation target". Consequently, the translator and the proofreader can figure out the new portion to be translated or proofread, whereby translation or proofreading can be performed in a relatively short period of time.

Whenever the translation receiving section 103B of the translation support system 100 receives the translation regarding the provisional translation classified as the translation target among the respective classifications from the translator terminal 200 with the translation associated with the original text thereof, the translation-to-be-proofread registering section 103C classifies each translation as the proofreading target and registers it. Accordingly, the translator has only to translate only what is necessary.

Meanwhile, whenever the proofread-translation receiving section 103D receives the proofread translation regarding the translation classified as the proofreading target among the respective classifications from the proofreader terminal 300 with the proofread translation assorted with the original text thereof, the proofread-translation registering section 103E classifies each proofread translation as already proofread and registers it. Accordingly, the proofreader should proofread only what is necessary.

As the segment-number outputting means 103G outputs the quantities of translation and proofreading to the translator terminal 200 and the proofreader terminal 300, the translator and the proofreader can easily figure out the progress of the work.

As described above, since the portion to be translated or proofread can be figured, an inconvenience of translating or proofreading an unnecessary portion can be avoided as compared with the prior art.

In FIG 10, when comment information is stored in the classified-translation storing section 101B, a matter such as an error of sentence structure is displayed in the comment field 79. This will enable the proofreader to assess the translation done by the translator, for instance.

The present invention is not limited to the above-described embodiment, and can be modified and adapted in various forms. For instance, information to be output may be in the form of HTML (Hyper Text Markup Language), PDF (Portable Document Format) or the like.

While an example of translation from Japanese to English has been in the foregoing description of the embodiment, which is not restrictive, other languages may be acceptable.

The translation support apparatus 100 is one apparatus in FIG. 3, but it may be realized by the cooperative operation of a plurality of apparatuses depending on the environment of usage.

The translation support apparatus 100 may not include the segment-number storing section 101C, but the segment-number outputting section 103G may output the number of segments counted by the segment-number counting section 103F.

How to classify the non-translation and non-proofreading target described above can be modified according to the environment of usage. For instance, the provisional translation producing section 103H can classify as the "proofreading target" according to the value of the rate of appropriation. The translated text of the original text draft translated may be received without the provisional translation producing section 103H provided. In this case, for instance, the processing section 103 stores the receiving translated text in the area of the "translation target".

Further, it is not necessary to transmit all the translated texts transmitted by the translation support system 100 to the translator terminal 200 or the proofreader terminal 300. For instance, only the original text and the provisional translation classified as the translation target may be transmitted to the translator terminal. Only the original text and the translation classified as the proofreading target may be transmitted to the proofreader terminal. For instance, the classified-translation storing means 101B may set the portion thereof to be empty when there is no translated text to be transmitted.

The translated text classified as the non-translation and non-proofreading target may not be transmitted to the translator terminal 200 or the proofreader terminal 300, and among the translated texts classified as the non-translation and non-proofreading target, those with a predetermined amount of segments (for instance, five segments), which are in the segments preceding and/or succeeding the translation classified as the translation target or that of proofreading, may be transmitted.

The number of segments of the translated text translated by the translator is indicated in FIG. 10, but the number of segments of the (remaining) translated text necessarily to be translated may be displayed. The same is true of the proofreader terminal 300.

After the step S16, upon reception of a request from the proofreader terminal 300, the translation support system 100 may store "evaluation information" to be sent to an affiliation of the translator (company or the like) in the storing section 101 (original text storing section 101A) with evaluation information associated with the original text. For instance, the possible contents of evaluation information may be rankings for evaluation of the quality of translations (for instance, Poor, Fair, Good and Excellent), and as to whether or not to continue a contract of translation, etc. In this case, for example, evaluation information may be output as a predetermined document through the input/output section 104 to be transmitted to the affiliation of the translator.

Further, in accordance with the instruction from the translator or the proofreader, color-designating information stored in the storing section 101 may be changed. Color-designating information to be displayed may be settable for each translator and proofreader.

The information processing apparatus to realize the translation support apparatus 100 according to the embodiment of the present invention can be realized by using an ordinary computer system instead of an exclusive one. For instance, by installing the program for executing any one of the above-described ones from a medium (CD-ROM, etc.) storing the program to a general-purpose computer, the translation support apparatus 100 that executes the above-described processes can be configured.

When the OS (Operating System) shares a part of the processes or constitutes a part of the components of the present invention, a program excluding that part may be stored in the recording medium. Also in this case, it is assumed that the program for performing the respective functions of the computer or for executing the steps is stored in the recording medium.

The program can be distributed via the communication network with the program superimposed on a carrier. For instance, the program may be put on a bulletin board system (Bulletin Board System: BBS) of the communication network and distributed via the network. And, the structure may be taken such that the above-described processes can be executed by activating the program, and executing it under the control of the OS in the same manner as other application programs.

### Industrial Applicability

The present invention is available for a computer apparatus which supports translation.

The present invention is based on Japanese Patent Application No. 2002-366312 filed on December 18, 2002, and includes the specification, claims, drawings and abstract thereof. The disclosure of the application is hereby entirely incorporated in the present specification by reference.

## Claims

1. A translation support system (100) connected to a translator terminal (200) for a translator and a proofreader terminal (300) for a proofreader via a communication network (4), comprising:
a first memory (101A) which stores a plurality of original texts to be translated;
a second memory (101B) which stores draft translations of the respective original texts in association with the plurality of original texts stored in said first memory;
a third memory (101B) which stores translations in association with the plurality of original texts;
a fourth memory (101B) which stores proofread translations in association with the proofread translations associated with the plurality of original texts;
draft-translation outputting means (103A) for outputting an original text read out from said first memory (101A) and a draft translation read out from said second memory (101B) to the translator terminal via said communication network;
translation receiving means (103B) for receiving the translation edited in accordance with an instruction from the translator from said translator terminal via said communication network;
translation-to-be-proofread storing means (103C) which stores the translation received by said translation receiving means in said third memory (101B);
translation outputting means (103A) for outputting the translation read out from said third memory (101B) to said proofreader terminal via said communication network;
proofread-translation receiving means (103D) for receiving the proofread translation proofread in accordance with an instruction from the proofreader from said proofreader terminal via said communication network;
proofread-translation registering means (103 E) for storing the proofread translation received by said proofread-translation receiving means in said fourth memory (101B); and
completed-text outputting means (103) for reading out and outputting the proofread translation from said fourth memory.

2. The translation support system (100) according to claim 1, further comprising:
text analyzing means (103) for analyzing and dividing the original text into a plurality of text elements and storing them in said first memory;
translation counting means (103F) for counting the number of text elements of the translation stored in said third memory; and
outputting means (103G) for outputting the number of text elements counted by said translation counting means to said translator terminal.

3. The translation support system (100) according to claim 1, further comprising:
text analyzing means (103) for analyzing the original text, dividing it into a plurality of text elements and storing them in said first memory;
draft-translation counting means (103F) for counting the number of text elements of the draft translation stored in said second memory; and
outputting means (103G) for outputting the number of text elements counted by said draft-translation counting means to said translator terminal.

4. The translation support system (100) according to claim 1, further comprising:
text analyzing means (103) for analyzing the original text, dividing it into a plurality of text elements and storing them in said first memory;
proofread-translation counting means (103F) for counting the number of text elements of the proofread translation stored in said fourth memory; and
outputting means (103G) for outputting the number of text elements counted by said proofread-translation counting means to said proofreader terminal.

5. The translation support system (100) according to claim 1, further comprising:
text analyzing means (103) for analyzing the original text, dividing it into a plurality of text elements and storing them in said first memory;
translation counting means (103F) for counting the number of text elements of the translation stored in said third memory; and
outputting means (103G) for outputting the number of text elements counted by said translation counting means to said proofreader terminal.

6. The translation support system (100) according to claim 1, further comprising draft-translation producing means (103H) for producing the draft translation of the original text read out from said first memory, and registering it in said second memory.

7. The translation support system (100) according to claim 6, further comprising a fifth memory (103B) which stores a draft translation unnecessary to be translated or proofread,
wherein said draft-translation producing means (103H) includes means for determining whether or not translation and proofreading are necessary for the produced draft translation, and stores the draft translation in said fifth memory when the determining means determines that neither translation nor proofreading is necessary for the draft translation.

8. The translation support system (100) according to claim 1, wherein said translation outputting means (103A) is means for further reading out the translation together with the original text associated therewith from said first memory, and outputting them to said proofreader terminal.

9. The translation support system (100) according to claim 1, further comprising text analyzing means (103) for analyzing and dividing the original text into a plurality of text elements and storing them in said first memory,
wherein said translation outputting means (103A) is means for reading out and outputting a proofread translation preceding and/or succeeding a translation and having a predetermined number of text elements stored in said fourth memory, together with the translation, to said proofreader terminal.

10. The translation support system (100) according to claim 1, further comprising color information storing means (103) for storing color-designating information designating display colors of an original text, a provisional translation, a translation and a proofread translation, respectively,
wherein said translation outputting means (103A) is one for instructing said translator terminal and/or said proofreader terminal to output the original text, the provisional translation, the translation and the proofread translation, in accordance with the color-designating information stored in said color information storing means.

11. A translation support program which allows a computer including:
a first memory (101A) which stores a plurality of original texts to be translated;
a second memory (101 B) which stores draft translations of the respective original texts in association with the plurality of original texts stored in the first memory;
a third memory (101B) which stores translations in association with the plurality of original texts; and
a fourth memory (101B) which stores proofread translations in association with the plurality of original texts,
and to be connected to a translator terminal (200) and a proofreader terminal (300) via a communication network (4),
to operate as:
draft-translation outputting means (103A) for outputting an original text read out from the first memory (101A) and a draft translation read out from the second memory (101B) to the translator terminal via the communication network;
translation receiving means (103B) for receiving the translation edited in accordance with an instruction from a translator from the translator terminal via the communication network;
translation-to-be-proofread storing means (103C) for storing the translation received by said translation receiving means in the third memory (101B);
translation outputting means (103A) for outputting the translation read out from the third memory (101 B) to the proofreader terminal via the communication network;
proofread-translation receiving means (1 03D) for receiving the proofread translation proofread in accordance with an instruction from a proofreader from the proofreader terminal via the communication network;
proofread-translation registering means (103E) for storing the proofread translation received by said proofread-translation receiving means in the fourth memory (101B); and
completed text outputting means (103) for reading out and outputting the proofread translation from the fourth memory.
